# EUROPEAN PATENT SPECIFICATION

(11) **EP 1 602 216 B1**
(45) Date of publication and mention of the grant of the patent: **12.12.2007**
(21) Application number: 04719543.3
(22) Date of filing: 11.03.2004
(51) Int. Cl.: H04L 29/06, H04L 12/28

(54) **FORCED ENCRYPTION FOR WIRELESS LOCAL AREA NETWORKS**
ERZWUNGENE VERSCHLÜSSELUNG FÜR DRAHTLOSE LOKALE NETZWERKE
CHIFFREMENT FORCE POUR RESEAUX LOCAUX SANS FIL

(30) Priority: 13.03.2003 US 453953 P
(43) Date of publication of application: 07.12.2005
(73) Proprietor: Nokia Corporation, 02150 Espoo (FI)
(72) Inventor: PIENIMÄKI, Sami, FIN-33720 Tampere (FI); KORPIHARJU, Jari, FIN-02610 Espoo (FI); LYBÄCK, Niklas, FIN-02320 Espoo (FI)
(74) Representative: TBK-Patent
(86) International application number: PCT/IB2004/000687
(87) International publication number: WO 2004/082237

(56) References cited:
- J.CARON, IP SECTOR TECHNOLOGIES: "Public Wireless LAN roaming issues" INTERNET DRAFT, [Online] 28 February 2002 (2002-02-28), XP002283477 Retrieved from the Internet: <URL:http://www.ipsector.com/drafts/draft- caron-public-wlan-roaming-issues-00.txt> [retrieved on 2004-06-04]
- ALCATEL: "Public Wireless LAN for Mobile Operators" WHITE PAPER, [Online] 14 March 2003 (2003-03-14), XP002283478 Retrieved from the Internet: <URL:http://www.alcatel.com/doctypes/artic lepaperlibrary/pdf/WP/T0303-Wireless_LAN-E N.pdf> [retrieved on 2004-06-04]

## Description

The present invention relates to a method of enforcing encryption on a public wireless local area network as well as to a related system and network element.

Currently, in practice all traffic in public access zones of wireless local area networks (WLAN) is not encrypted, with the exception of users of virtual private network (VPN) applications.

However, in unlicensed public wireless local area networks (WLAN), special attention has to be paid to security issues such as to protect the end users privacy. So far, presently implemented wireless LAN installations comprise security features to offer an encryption for the open air interface. Though, these are not considered to be feasible for public installations due to a lack of being scaleable. Further, no feasible key distribution mechanisms for the encryption are known yet. Moreover, several vulnerabilities have been found so that ready-made tools may be found from the Internet to hack these systems.

Thus, standards are recently under development such as in "IEEE 802.11 task group i" which are about to develop solutions for these problems. Though, the implementation of these solutions will require new software and most likely also new hardware to be installed at the network, and, most importantly, new software and new hardware to be installed at the end users side.

The document "Public Wireless LAN roaming issues" of J. Caron, IP Sector Technologies, Internet draft of February 28, 2002 discloses public wireless internet access zones based on IEEE 802.11 wireless LAN technology. In this document, it is considered that many issues are impeding further adoption of the technology by end-users, in particular the inability or difficulty to roam between the networks of different providers. Further, this document aims to show how they are different from roaming in other contexts such as dialup access to the Internet or GSM roaming, and how current solutions do not fully address these issues.

Therefore, it is an object of the present invention to overcome the above shortcomings of the the prior art.

According to the present invention, this object is solved according to what is set forth in the appended independent claims. Advantageous modifications are defined in the appended dependent claims. on a public wireless local area network, the public wireless local area network comprising: at least one

Thus, according to the present invention, the access control point retrieves information from RADIUS messages which user terminals do not use a 802.11i encryption, and directs the traffic encryption enforcement only to the such identified user terminals.

Preferably, the encrypting security service is the secure sockets layer (SSL) or the transport layer security (TLS).

Accordingly, it is an advantage of the present invention that it is suitable for virtually all wireless local area network terminals without requiring any software installations at the terminal side. In addition, no changes on a used operating system or a browser type are necessary. Further, the present invention is transparent for most of the network elements thus requiring only minor changes in the network.

Hence, a major security enhancement for public wireless local area network access zones is provided by the present invention. That is, contrary to the prior art, the present invention also allows end users without a virtual private network to use most of their applications securely. On the other hand, the present invention is transparent for users of a virtual private network.

In general, the present invention is easy to implement and to deploy, and it does not require any changes at the terminals of any end user, since there already exists a wide support for the secure sockets layer and for the transport layer security, while most of the used applications such as browsing and email are addressed by the present invention.

Further details, features and advantages of the present invention will become more readily apparent from the following detailed description of the preferred embodiments which is to be taken in conjunction with the appended drawing, in which:

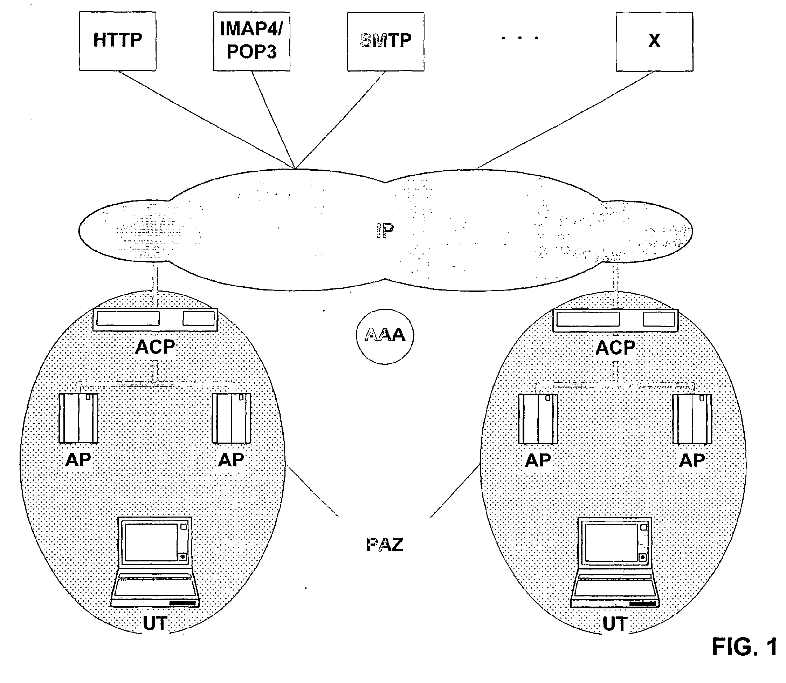

Fig. 1 shows a wireless local area network architecture underlying the present invention.

As shown in Fig. 1, a public wireless local area network underlying the present invention comprises the following physical and logical elements: wireless local area network (WLAN) terminals UT used by end users and access points AP, access control points ACP and authentication, authorization and accounting (AAA) systems AAA operated by a network operator. The terminals UT are used to access the wireless local area network via a radio interface. The counterpart in the network regarding this interface is the access point AP. An access control point ACP controls the access to the network and initiates the authentication, authorization and accounting (AAA) for the terminal UT in question. The authentication, authorization and accounting system AAA is a back end system for providing corresponding functions. All or some of the above network elements may reside in a same physical network element.

According to the preferred embodiment of the present invention, if an end user arrives to a public wireless local area network service area (a public access zone PAZ), she/he authenticates herself/himself towards the authentication, authorization and accounting system AAA. After the authentication, the end user has access to the Internet IP, but her/his traffic over the air-interface is not necessarily encrypted.

Here, when the end user tries to access the Internet IP, the access control point ACP forces applications X to switch the traffic to an encrypted port such as according to the secure sockets layer SSL (as developed by Netscape) or according to the transport layer security TLS (see RFC2246 of the Internet Engineering Task Force), before it allows any traffic to go through. This is possible even if the initial request for the application in question is sent un-encrypted. Examples of applications that can be forced to use the secure sockets layer SSL or the transport layer security TLS encryption include application layer protocols running on top of the TCP/IP (transport control protocol, Internet protocol) and UDP/IP (user datagram protocol), respectively, such as the hypertext transfer protocol HTTP for browsing the Internet, the Internet message access protocol 4 IMAP4 as well as the post office protocol 3 POP3 for incoming mail, and the simple mail transfer protocol SMTP for outgoing mail.

The above described enforcement to switch the traffic to an encrypted port can also be configured to only take place for users without an 802.11i encryption in the WLAN interface. In this case, the access control point ACP retrieves this knowledge from RADIUS (Remote Authentication Dial-In User Service) messages.

Thus, the above includes a description of a method as well as related system and network element of enforcing encryption on a public wireless local area network, the public wireless local area network comprising: at least one access point for the wireless connection of corresponding user terminals; an authentication, authorization and accounting system; and at least one access control point for controlling access to the network, for initiating an authentication, authorization and accounting procedure for an accessing terminal, and for providing an Internet access gateway functionality; the method comprising: authenticating a user terminal to the authentication, authorization and accounting system upon arrival in a service area of the public wireless local area network; requesting access to the Internet by the user terminal; and enforcing applications corresponding to the Internet access request of the user terminal to switch their traffic to an encrypting security service port.

While it is described above what is presently considered to be the preferred embodiments of the present invention, it is apparent to those who are skilled in the art that various changes and modifications may be made without departing from the scope of the present invention as defined in the appended claims.

## Claims

1. A method of enforcing encryption on a public wireless local area network (IP), using:
at least one access point (AP) for the wireless connection of corresponding user terminals (UT);
an authentication, authorization and accounting system (AAA); and
at least one access control point (ACP) for controlling access to the network, for initiating an authentication, authorization and accounting procedure for a user terminal, and for providing an Internet access gateway functionality; the method comprising:
authenticating the user terminal (UT) to the authentication, authorization and accounting system (AAA) upon arrival in a service area (PAZ) of the public wireless local area network (IP);
requesting access to the Internet by the user terminal (UT);
**characterized by**
retrieving information by the access control point (ACP) from RADIUS messages to know if the user terminal (UT) does not use an encryption according to the IEEE 802.11i standard ;
enforcing applications corresponding to the Internet access request of the user terminal (UT) to switch their traffic to an encrypting security service port only when the user terminal does not use a 802.11i encryption;
wherein the enforcement is performed by the access control point (ACP).

2. The method according to claim 1, wherein the encrypting security service is the secure sockets layer or the transport layer security.

3. The method according to claim 1, wherein the enforced applications are selected from a group comprising the hypertext transfer protocol for browsing the Internet, the Internet message access protocol 4, the post office protocol 3, and the simple mail transfer protocol.

4. A system for enforcing encryption on a public wireless local area network (IP), comprising at least one user terminal (UT), and a public wireless local area network (IP), which comprises:
at least one access point (AP) for the wireless connection of a user terminal (UT);
an authentication, authorization and accounting sub-system; and
at least one access control point (ACP) for controlling access to the network, for initiating an authentication, authorization and accounting procedure for the user terminal (UT) at the authentication, authorization and accounting sub-system upon its arrival in a service area (PAZ) of the public wireless local area network (IP), and for providing an Internet access gateway functionality,
**characterized in that**
the access control point (ACP) is configured to retrieve information from RADIUS messages to know if the user terminal (UT) does not use an encryption according to the IEEE802.11 standard, and
the access control point (ACP) is configured to enforce applications corresponding to an Internet access request of the user terminal (UT) to switch their traffic to an encrypting security service port only when the user terminal does not use a 802.11 encryption.

5. The system according to claim 4, wherein the encrypting security service is the secure sockets layer or the transport layer security.

6. An access control point network element for enforcing encryption on a public wireless local area network (IP), comprising:
means for controlling access to the network;
means for initiating an authentication, authorization and accounting procedure for a user terminal (UT) at an authentication, authorization and accounting sub-system of the public wireless local area network (IP) upon arrival of the user terminal (UT) in a service area (PAZ) of the public wireless local area network (IP); and
means for providing an Internet access gateway functionality;
**characterized by**
means for retrieving information from RADIUS messages to know if the user terminal (UT) does not use an encryption according to the IEEE 802.11i standard; and
means for enforcing applications corresponding to an Internet access request of the user terminal (UT) to switch their traffic to an encrypting security service port only when the user terminal does not use a 802.11i encryption.

7. The network element according to claim 6, wherein the encrypting security service is the secure sockets layer or the transport layer security.

## Patentansprüche

1. Verfahren zum Erzwingen von Verschlüsselung auf einem öffentlichen drahtlosen lokalen Netzwerk (IP), unter Verwendung von:
zumindest einem Zugangspunkt (AP) für die drahtlose Verbindung entsprechender Benutzerendgeräte (UT);
einem Authentifizierungs-, Autorisierungs- und Abrechnungssystem (AAA); und
zumindest einem Zugangskontrollpunkt (ACP) zur Kontrolle von Netzwerkzugang, zum Einleiten eines Authentifizierungs-, Autorisierungs- und Abrechnungsvorganges für ein Benutzerendgerät, und zum Bereitstellen einer Internetzugangsgatewayfunktionalität; wobei das Verfahren umfasst:
Authentifizieren des Benutzerendgerätes (UT) gegenüber dem Authentifizierungs-, Autorisierungs- und Abrechnungssystem (AAA) auf das Eintreffen in einem Dienstbereich (PAZ) des öffentlichen drahtlosen lokalen Netzwerks (IP) hin;
Anfordern von Internetzugang durch das Benutzerendgerät (UT);
**gekennzeichnet durch**
Abrufen von Informationen aus RADIUS Nachrichten durch den Zugangskontrollpunkt (ACP) um zu wissen, ob das Benutzerendgerät (UT) keine Verschlüsselung gemäß dem IEEE 802.11i Standard benutzt;
Erzwingen, dass entsprechend der Internetzugangsanforderung des Benutzerendgerätes (UT) Anwendungen ihren Verkehr an einen verschlüsselnden Sicherheitsdienstport nur umschalten wenn das Benutzerendgerät keine 802.11i Verschlüsselung benutzt;
wobei das Erzwingen von dem Zugangskontrollpunkt (ACP) durchgeführt wird.

2. Verfahren gemäß Anspruch 1, wobei es sich bei dem verschlüsselnden Sicherheitsdienst um Secure Socket Layer, SSL, oder Transport Layer Security, TLS, handelt.

3. Verfahren gemäß Anspruch 1, wobei die Anwendungen, die gezwungen werden, aus einer Gruppe ausgewählt werden, die das Hypertext Transfer Protocol, HTTP, zum Browsen des Internets, das Internet Message Access Protocol 4, IMAP4, das Post Office Protocol 3, POP3, und das Simple Mail Transfer Protocol, SMTP, umfasst.

4. System zum Erzwingen von Verschlüsselung auf einem öffentlichen drahtlosen lokalen Netzwerk (IP), das zumindest ein Benutzerendgerät (UT) umfasst, und eines öffentlichen drahtlosen lokalen Netzwerks (IP), welches umfasst:
zumindest einen Zugangspunkt (AP) für die drahtlose Verbindung eines Benutzerendgerät (UT);
ein Authentifizierungs-, Autorisierungs- und Abrechnungssubsystem; und
zumindest einen Zugangskontrollpunkt (ACP) zur Kontrolle von Netzwerkzugangs, zum Einleiten eines Authentifizierungs-, Autorisierungs- und Abrechnungsvorganges für das Benutzerendgerät (UT) gegenüber dem Authentifizierungs-, Autorisierungs- und Abrechnungssubsystem auf das Eintreffen in einem Dienstbereich (PAZ) des öffentlichen drahtlosen lokalen Netzwerks (IP) hin, und zum Bereitstellen einer Internetzugangsgatewayfunktionalität,
**dadurch gekennzeichnet, dass**
der Zugangskontrollpunkt (ACP) eingerichtet ist um Informationen aus RADIUS Nachrichten abzurufen, um zu wissen, ob das Benutzerendgerät (UT) keine Verschlüsselung gemäß dem IEEE 802.11i Standard benutzt, und
der Zugangskontrollpunkt (ACP) eingerichtet ist um zu erzwingen, dass entsprechend der Internetzugangsanforderung des Benutzerendgerätes (UT) Anwendungen ihren Verkehr an einen verschlüsselnden Sicherheitsdienstport nur umschalten wenn das Benutzerendgerät keine 802.11i Verschlüsselung benutzt.

5. System gemäß Anspruch 4, wobei der verschlüsselnde Sicherheitsdienst Secure Socket Layer, SSL, oder Transport Layer Security, TLS, ist.

6. Zugangskontrollpunktnetzwerkelement zum Erzwingen von Verschlüsselung auf einem öffentlichen drahtlosen lokalen Netzwerk (IP), das umfasst:
Einrichtung zur Kontrolle von Netzwerkzugang;
Einrichtung zum Einleiten eines Authentifizierungs-, Autorisierungs- und Abrechnungsvorganges für ein Benutzerendgerät (UT) gegenüber einem Authentifizierungs-, Autorisierungs- und Abrechnungssubsystem des öffentlichen drahtlosen lokalen Netzwerks (IP) auf das Eintreffen des Benutzerendgerätes (UT) in einem Dienstbereich (PAZ) des öffentlich drahtlosen lokalen Netzwerks (IP) hin; und
Einrichtung zum Bereitstellen einer Internetzugangsgatewayfunktionalität;
**gekennzeichnet durch**
Einrichtung zum Abruf von Informationen aus RADIUS Nachrichten, um zu wissen, ob das Benutzerendgerät (UT) keine Verschlüsselung gemäß dem IEEE 802.11i Standard benutzt; und
Einrichtung um zu erzwingen, dass entsprechend der Internetzugangsanforderung des Benutzerendgerätes (UT) Anwendungen ihren Verkehr an einen verschlüsselnden Sicherheitsdienstport nur umschalten wenn das Benutzerendgerät keine 802.11i Verschlüsselung benutzt.

7. Netzwerkelement gemäß Anspruch 6, wobei der verschlüsselnde Sicherheitsdienst Secure Socket Layer, SSL, oder Transport Layer Security, TLS, ist.

## Revendications

1. Procédé de mise en application imposée du chiffrement sur un réseau local public sans fil (IP), utilisant :
au moins un point d'accès (AP) en vue de la connexion sans fil de terminaux d'utilisateur (UT) correspondants ;
un système d'authentification, d'autorisation et de comptabilité (AAA) ; et
au moins un point de contrôle d'accès (ACP) en vue de commander l'accès au réseau, d'initier une procédure d'authentification, d'autorisation et de comptabilité pour un terminal d'utilisateur, et de fournir une fonctionnalité de passerelle d'accès à Internet ;
le procédé comportant les étapes consistant à :
authentifier le terminal d'utilisateur (UT) au niveau du système d'authentification, d'autorisation et de comptabilité (AAA) à l'arrivée dans une zone de service (PAZ) du réseau local public sans fil (IP) ;
demander l'accès à Internet au moyen du terminal d'utilisateur (UT) ;
**caractérisé par** les étapes consistant à
récupérer des informations, au moyen du point de contrôle d'accès (ACP), à partir de messages RADIUS (service d'identification à distance des utilisateurs) afin de savoir si le terminal d'utilisateur (UT) n'utilise pas un chiffrement selon la norme 802.11i de l'IEEE ;
imposer les applications correspondant à la demande d'accès à Internet du terminal d'utilisateur (UT) en vue de commuter leur trafic à un port de service de sécurité de chiffrement uniquement lorsque le terminal d'utilisateur n'utilise pas un chiffrement 802.11i ;
dans lequel la mise en application imposée est exécutée au moyen du point de contrôle d'accès (ACP).

2. Procédé selon la revendication 1, dans lequel le service de sécurité de chiffrement est la couche d'échange sécurisé ou la sécurité de couche transport.

3. Procédé selon la revendication 1, dans lequel les applications imposées sont sélectionnées parmi un groupe comportant le protocole de transfert hypertexte en vue de naviguer sur Internet, le protocole de messagerie IMAP 4, le protocole POP 3, et le protocole SMTP.

4. Système de mise en application imposée du chiffrement sur un réseau local public sans fil (IP), comportant au moins un terminal d'utilisateur (UT), et un réseau local public sans fil (IP), qui comporte :
au moins un point d'accès (AP) pour la connexion sans fil d'un terminal d'utilisateur (UT) ;
un sous-système d'authentification, d'autorisation et de comptabilité ; et
au moins un point de contrôle d'accès (ACP) en vue de commander l'accès au réseau, d'initier une procédure d'authentification, d'autorisation et de comptabilité pour le terminal d'utilisateur (UT) au niveau du sous-système d'authentification, d'autorisation et de comptabilité à son arrivée dans une zone de service (PAZ) du réseau local public sans fil (IP), et pour fournir une fonctionnalité de passerelle d'accès à Internet,
**caractérisé en ce que** le point de contrôle d'accès (ACP) est configuré pour récupérer des informations à partir de messages RADIUS en vue de savoir si le terminal d'utilisateur (UT) n'utilise pas un chiffrement selon la norme 802.11 i de l'IEEE, et
le point de contrôle d'accès (ACP) est configuré pour imposer des applications correspondant à une demande d'accès à Internet du terminal d'utilisateur (UT) en vue de commuter leur trafic à un port de service de sécurité de chiffrement uniquement lorsque le terminal d'utilisateur n'utilise pas un chiffrement 802.11i.

5. Système selon la revendication 4, dans lequel le service de sécurité de chiffrement est la couche d'échange sécurisé ou la sécurité de couche transport.

6. Élément de réseau de point de contrôle d'accès en vue d'imposer le chiffrement sur un réseau local public sans fil (IP), comportant :
des moyens en vue de commander l'accès au réseau ;
des moyens en vue d'initier une procédure d'authentification, d'autorisation et de comptabilité pour un terminal d'utilisateur (UT) à un sous-système d'authentification, d'autorisation et de comptabilité du réseau local public sans fil (IP) à l'arrivée du terminal d'utilisateur (UT) dans une zone de service (PAZ) du réseau local public sans fil (IP) ; et
des moyens en vue de fournir une fonctionnalité de passerelle d'accès à Internet ;
**caractérisé en ce qu'**il comporte
des moyens en vue de récupérer des informations de messages RADIUS afin de savoir si le terminal d'utilisateur (UT) n'utilise pas un chiffrement selon la norme 802.11i de l'IEEE ; et
des moyens en vue d'imposer des applications correspondant à une demande d'accès à Internet du terminal d'utilisateur (UT) pour commuter leur trafic à un port de service de sécurité de chiffrement uniquement lorsque le terminal d'utilisateur n'utilise pas un chiffrement 802.11i.

7. Élément de réseau selon la revendication 6, dans lequel le service de sécurité de chiffrement est la couche d'échange sécurisé ou la sécurité de couche transport.
